# EUROPEAN PATENT APPLICATION

(11) **EP 3 023 634 A1**
(43) Date of publication of application: **25.05.2016**
(21) Application number: 15195920.2
(22) Date of filing: 23.11.2015
(51) Int. Cl.: F03D 1/06

(54) **A HUB FOR A WIND TURBINE**

(30) Priority: 24.11.2014 GB 201420833
(71) Applicant: Blade Dynamics Limited, Southampton, Hampshire SO16 7NS (GB)
(72) Inventor: HAYDEN, Paul Trevor, Winchester, Hampshire SO23 7FY (GB); WHILEY, David, Shrewsbury, SY2 6AJ (GB)
(74) Representative: Bedford, Grant Richard

(57) **Abstract**

A hub for a wind turbine blade 20 is disclosed. The hub has a central axis about which it is rotatably mountable on a shaft and comprising three or more blade supporting arms A,B,C, each for supporting a respective blade 20. The hub has a leeward side, in use, facing a supporting tower and a windward side, in use, facing in the opposite direction. Each arm A,B,C comprises, on the leeward side, a pair of composite load bearing spar caps 47 with uniaxial fibres, the spar caps 4,7 and fibres extending continuously from the radially outermost extremity of the hub, past the shaft with a respective one of the pair on each side of the shaft, across a respective adjacent arm A,B,C and terminating at the far side of the respective adjacent arm A,B,C. On the windward side, a second pair of composite load bearing spar caps 4,7 with uniaxial fibres, the spar caps 4,7 and fibres extend continuously from the radially outermost extremity of the hub, past the shaft, with a respective one of the second pair on each side of the shaft, across a respective adjacent arm A,B,C and terminating on the far side of the respective adjacent arm A,B,C.

## Description

The present invention relates to a hub for a wind turbine.

The ever increasing size of modem day wind turbine blades leads to ever increasing hub masses. This mass has to be supported by the tower leading to a knock on effect in the required strength of the tower and hence the expense in building the turbine.

Wind turbine hubs are generally massive cast metal components which have a number of radially spaced blade supporting arms each of which must have a thick wall section in order to accommodate the large number of bolts required to attach the wind turbine blade.

An improvement to a conventional wind turbine blade is disclosed in our earlier WO 2010/041012. This proposes a composite hub with two spaced apart bearings. This combination reduces the blade root diameter and wall thickness and the bearing diameter as the need for the bolted connection is eliminated and the use of composite material offers a further weight reduction.

The present invention is concerned with reducing the mass of the hub to reduce the loads on the tower hence reducing manufacturing costs, improving turbine life and reliability.

According to the present invention there is provided a hub according to claim 1.

The idea of a hub made of a number of arms which intersect one another at a plurality of locations provides a very stiff and stable structure. In view of the inherent structural strength, the mass of material can be correspondingly reduced thereby achieving a weight reduction.

Furthermore, the presence of spar caps of composite uniaxial material which extend continuously from the radially outermost extremity of the hub past the shaft and which terminate on the far side of an adjacent arm provides excellent support for the edgewise loads and any flapwise bending moments towards the leeward side.

Preferably where one spar cap of one arm crosses the spar cap of an adjacent arm, it is rigidly fixed to it. This enhances the rigidity of the hub structure as the bending moments can be transferred between the spar caps thereby effectively distributing the load.

The spar caps in any one particular pair may be coplanar. However, preferably, the pair of spar caps are offset in an axial sense. This applies both to the first pair of spar caps on the leeward side and the second pair of spar caps on the windward side. The effect of this is that, when the arms are assembled, the spar caps on one side of each arm will be "higher" than the spar caps on the other side allowing the spar caps of one arm to pass the spar caps of the remaining arms without having to be bent or otherwise adapted to pass the spar cap of an adjacent arm. This means that the uniaxial spar caps can be straight thereby enhancing their load resisting abilities. This effect is enhanced if each spar cap is in a single plane, rather than requiring steps or bends to avoid an adjacent spar cap.

Each arm may be a single tubular component, the tubular components intersecting with one another. However, preferably, each arm comprises a pair of beams extending along opposite sides of the respective arm. These beams may have any suitable configuration. They may, for example, have a C-section or a I-section. Each beam preferably has a spar cap at each end. As an alternative to a beam, the spar caps may be an integral part of a single composite structure such as the above-mentioned tubular component. Alternatively, the beams may be replaced by cross braces with the spar caps at each end.

The beams preferably extend across the hub from the windward side to the leeward side. Preferably, each beam has a composite web extending from the windward side to the leeward side, the web comprising multiaxial fibres.

The hub may have a conventional mounting for the blade comprising a single bearing and an array of bolts surrounding the blade to bolt the blade to the hub. However, preferably, each arm has a pair of radially spaced apart annular bearings for receiving a respective wind turbine blade. A wind turbine blade with a cylindrical root at its radially innermost end can then be supported within the hub. The use of the spaced apart bearings provides for improved load distribution as described in WO 2010/041012.

The present invention is applicable to a hub with three or more arms and works best with an odd number or arms. However, preferably, there are three arms, as is conventional in a wind turbine. In this case, each beam preferably intersects with one respective beam of both of the other arms and terminates on the beam of an adjacent arm which is furthest from its radially outermost position. Such an arrangement effectively forms a six point star at the centre of the hub. This six point star provides good rigidity as each beam is supported at four separate locations. Also, the star can be sized to closely surround the main shaft of the wind turbine thereby providing an efficient load path from the hub into the main shaft.

This arrangement also provides rigid support for the innermost bearing. Each arm will have two beams from adjacent arms crossing one another at a position close to the centre of the hub. This provides an ideal site for the innermost bearing of the arm.

Preferably each arm is made up of a first wide beam and a second relatively narrow beam, the relatively narrow beam being sized to fit between the spar caps of a wide beam. This means that the structural part of the hub can be made up of two components. If these components are I or C beams with narrow spar caps, these can easily be transported as they can be stacked one above another.

Examples of hubs in accordance with the present invention will now be described with reference to the accompanying drawings, in which:
Figs. 1A - 1D are perspective views of the hub in various states of assembly;
Fig. 2 is a cross-section through one arm with the face panels in place;
Fig. 2A shows detail of the regions circled in Fig. 2;
Fig. 3A is a plan view of a narrow beam;
Fig. 3B is a plan view of a wide beam;
Figs. 4A to 4C are plan views of various possible beam configurations;
Fig. 5 is a schematic plan view showing the hub with four blades; and
Fig. 6 is a similar schematic plan showing a hub for five blades.

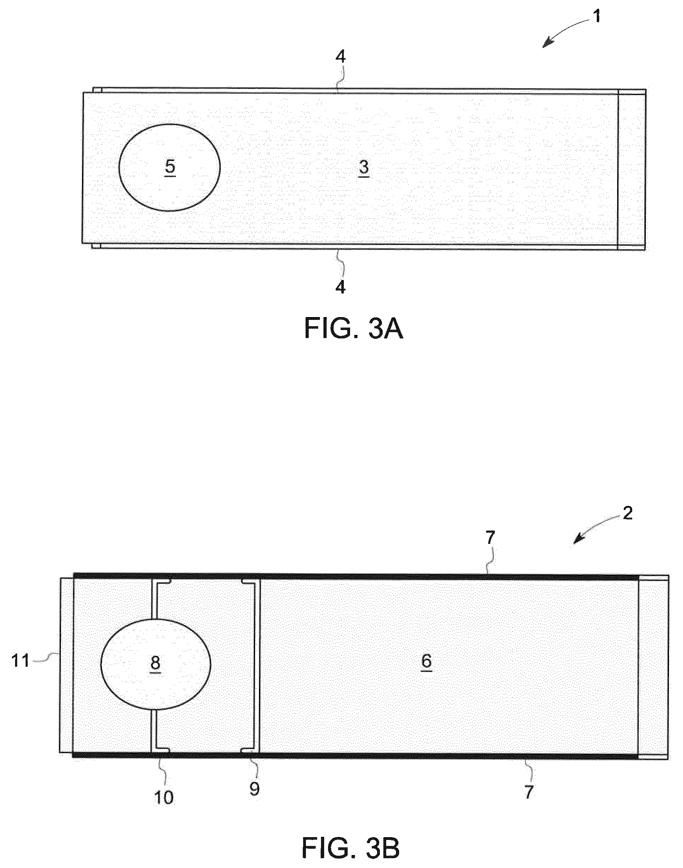

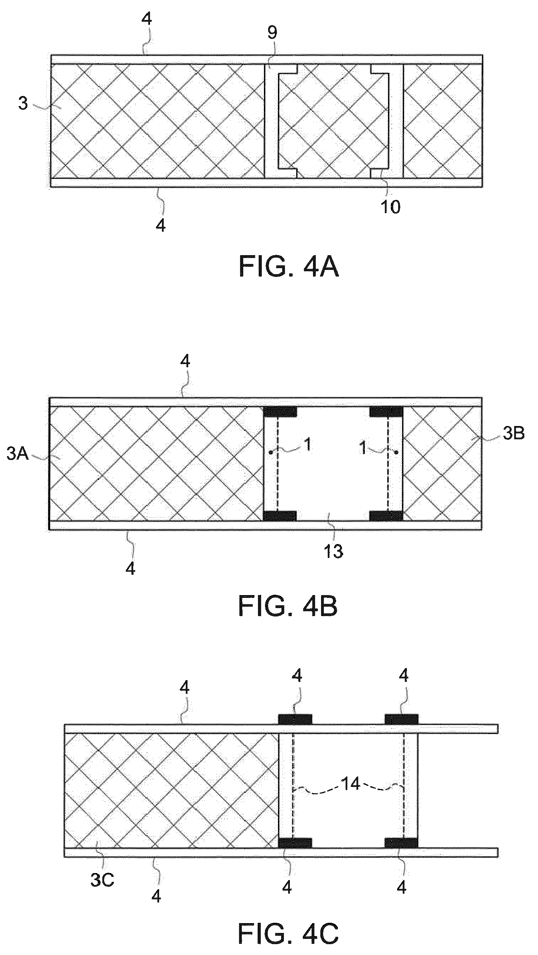

The main structure of the hub is primarily made up of two components which are separately shown in Figs. 3A and 3B. These comprise a narrow beam 1 and a wide beam 2. These relative terms simply require that the wide beam is wider than the narrow beam such that the narrow beam can fit through it as described below. The narrow beam 1 comprises a web 3 of composite materials with fibres, glass, carbon or any other combination of glass can be suitable material which are primarily biaxial arranged at ± 45° to the horizontal in Fig. 4A. At each end of the web 3 is a spar cap 4 which is a composite in which the fibres are primarily uniaxial carbon fibres which extend in a substantially radial direction of the hub. The webs and spar caps have sockets to allow them to be located with respect to one another, whereupon the components are overtaped to secure them together. The narrow beam 1 has a hole 5 close to one end to provide a mount for a bearing as described below.

The wide beam 2 has a similar construction to the narrow beam 1 in that it has a web to 6 which is a multiaxial composite and two composite spar caps 7 which have radial uniaxial carbon fibres. The wide beam 2 has a similar hole 8 to that in the narrow beam 1. The width of the web 6 of the wide beam 2 is slightly larger than the overall width of the narrow beam 1. The web 6 is formed with an outer slot 9 and an inner slot 10 both of which have a shallow C configuration and are sized to allow narrow beams 1 to be slotted therethrough.

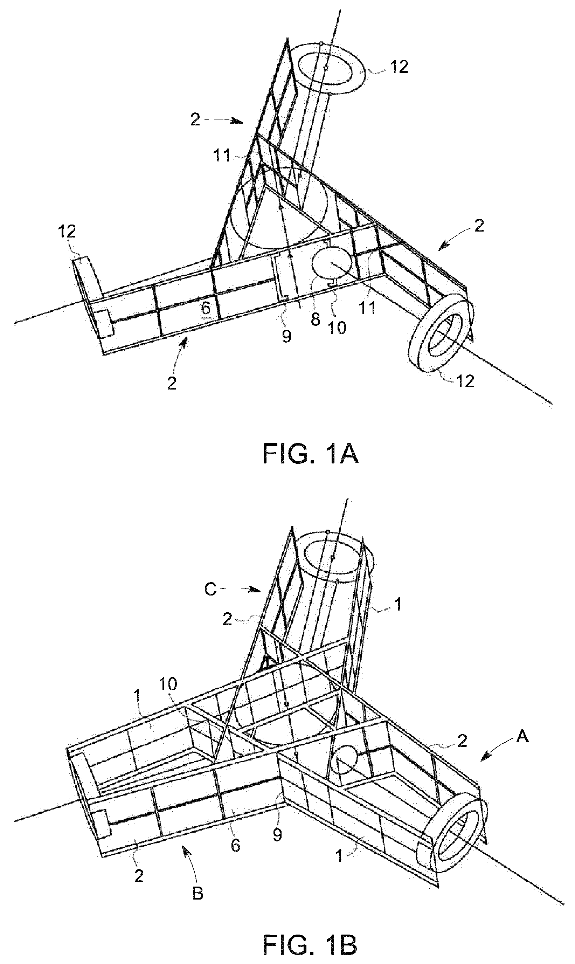

The hub is assembled from these components in a manner which will now be described with reference to Figs. 1A - D. As shown in Fig. 1A, three wide beams 2 are assembled together with an inner end 11 of each abutting a mid-portion of an adjacent web to form a triangular central section as shown in Fig. 1A. Each interface between flanges 7 of adjacent arms is bonded. It may be additionally or alternatively joined by overtaping or using mechanical fasteners. The use of such fasteners may be useful in locating the components relatively to one another as the hub is assembled. Fig. 1A also shows three outer bearing races 12 in place. However, these may be put in place at a later stage of assembly.

Three narrow beams 1 are then slotted in place as shown in Fig. 1B. For the purposes of illustration, the three arms of the hub in Fig. 1B have been labelled A, B and C. The narrow beam 1 for arm A is passed through the outer slot 9 in the wide beam 6 of the arm B, it then passes through the inner slot 10 of the wide beam 2 of arm C before abutting against the narrow beam 1 at the opposite side of the arm B to which it is adhered. The narrow beams are fixed as described above.

The hub is symmetrical about the main axis so the remaining narrow beams 1 for arms B and C are inserted in a similar manner. This forms the six point star structure shown in Fig. 1B with each beam either meeting or passing through other beams at four separate locations.

Whilst this provides a highly rigid structure despite the fact that it is made up of only six relatively flat beam sections, other structural arrangements can be contemplated particularly if the hub has more than three arms as described below.

Some different beam configurations are shown in Figs. 4A to 4C. Fig. 4A shows the same arrangement as that shown in Fig. 3B with the pair of slots. The inner slot 10 may also be provided with a hole 8 if the beam is to support a bearing. A slightly different design of wide beam is shown in Fig. 4B where, instead of the outer 9 and inner 10 slots, there is a single large opening 13 which effectively has the same size as the envelope of the outer 9 and inner 10 slots. It is easier to manufacture in some senses as the wide beam 2 can be made up with two web pieces 3A, 3B without any slots needing to be cut. Further, it is easier to subsequently insert the narrower beams 1 as shown in outline in Fig. 4B. If greater rigidity is required, an infill panel (not shown) can be inserted into the space 13.

A somewhat different arrangement is shown in Fig. 4C which does not require narrow and wide beams. Instead, all beams can be of the same width. In this case, the web is initially only a single panel 3C leaving the opposite end open for similarly configured additional beams 14 to be slid in from the opposite end as shown in outline in Fig. 4C. The gap between the two additional beams 14 and the gap between the end beam 14 at the ends of the spar caps 4 can be filled with infill panels (not shown) of the same or similar multiaxial material as the web 3. It will be appreciated from Fig. 4C that, because all beams are the same width, the spar caps 4 of one beam do not fit within the spar caps 4 of an adjacent beam. Rather, they are offset as shown in Fig. 4C.

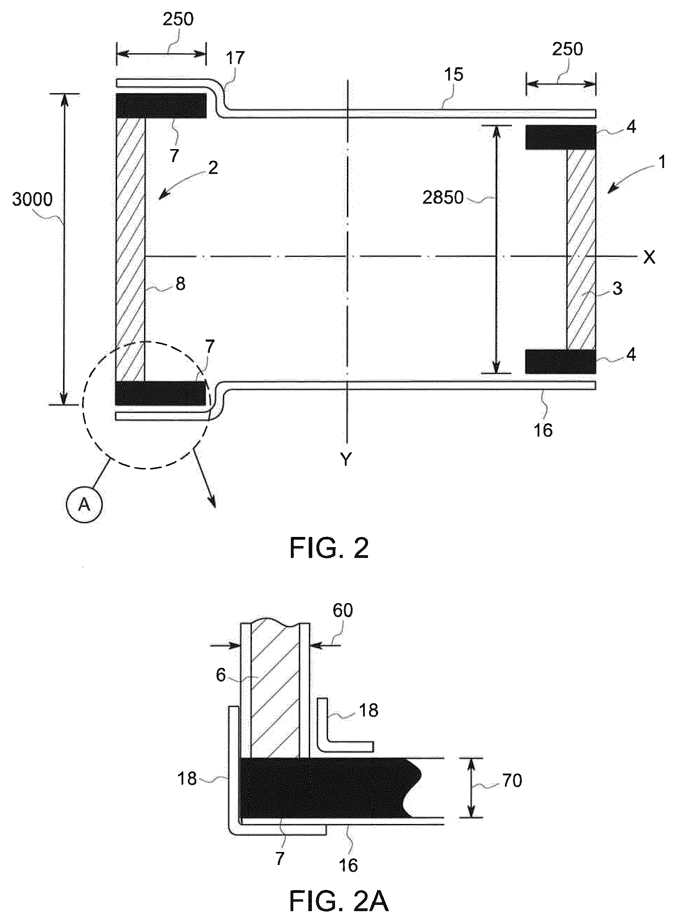

The manner in which the hub is completed is shown in Figs. 2 and 2A. Effectively, the front of the hub is covered by a windward face panel 15 and a similar leeward face panel 16 covers the rear of the hub, these face panels may have a similarly high structural rigidity as the web sections 6. However, preferably, they are thinner components with lower structural rigidity, although they comprise a composite material with multiaxial fibres. As can be seen in Fig. 2, the face panels have a step 17 to allow for the fact that the beams have different thicknesses. As shown in Fig. 2A, the face panels are connected to the beams using joint overtaping 18.

As will be appreciated from Fig. 2, the uniaxial fibre in the spar caps 7 is present in the four "corners" of each arm. The uniaxial composite may be similarly arranged if the arms have a circular cross-section. This arrangement provides high resistance to bending forces both in the flapwise (about the X axis in Fig. 2) and edgewise (about the Y axis in Fig. 2) directions.

On the windward side, the windward face panel 15 does not necessarily require an opening to receive the hub of the wind turbine as the hub may terminate behind the windward face panel. In this case, the spar caps 4, 7 on the windward side may be integrated with the windward face panel 15. Such an integrated component may be entirely formed of the uniaxial material described above in relation to the spar caps. Such a structure is within the scope of the invention as, although there are not two separate spar caps, the corners of this component effectively represent a second pair of composite spar caps of uniaxial fibre that happen to be linked by additional unaxial fibre.

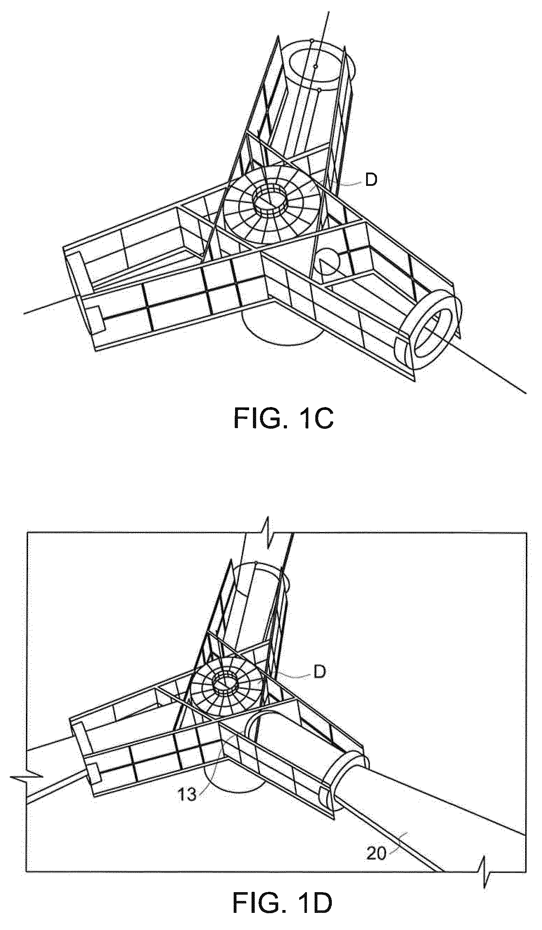

The manner in which the wind turbine blades 20 are connected will now be described with particular reference to Figs. 1D and 3.

As mentioned above, each arm has an outer bearing 12. It also has an inner bearing 13 close to the centre of the hub supported in the holes 5, 8. This can receive the blade, or a spar projecting from the blade. The spaced apart bearing arrangement is essentially as described in WO 2010/041012 and will not be described in further detail here. However, it should be noted that the design of hub described above is particularly effective in providing support for the inner bearing race 13 given than two of the beam segments cross one another in close proximity to the bearing race. The presence of the spaced apart bearings significantly reduces the load on each bearing as described in WO 2010/041012 and the blade is fixed in place by a retaining pin as described in the above application.

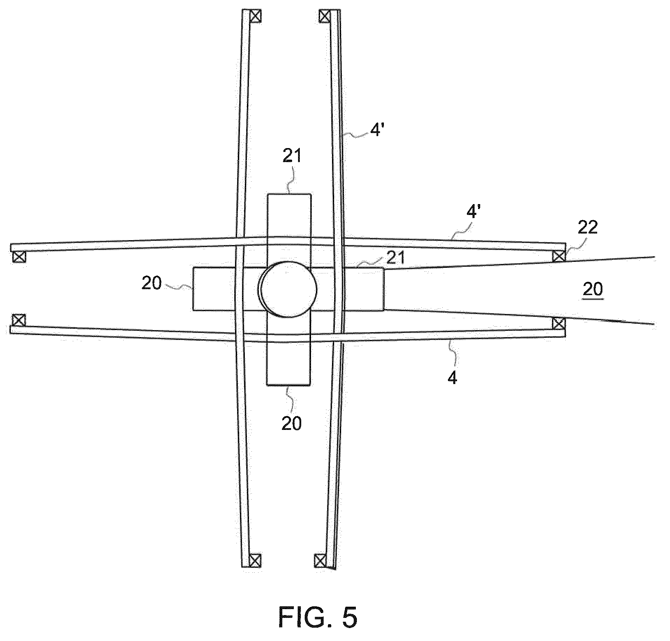

A hub for supporting four blades is shown schematically in Fig. 5. As this is a plan view, only the spar caps 4' and not the webs are visible. As shown, each flange 4' extends across the full diameter of the hub. The hub may have the same wide and narrow beam construction as described in Figs. 4A and 4B, or may have the beams of equal width as shown in Fig. 4C. Inner bearings 21 support the inner end of blade 20 while outer bearings 22 support the blade 20 (one of which is shown in Fig. 5) at the outermost extremity of the hub as previously described. It will be appreciated from Fig. 5 that each beam has only two intersection points with other beams as opposed to the four of the previous examples such that further beam sections may be included in order to improve the rigidity.

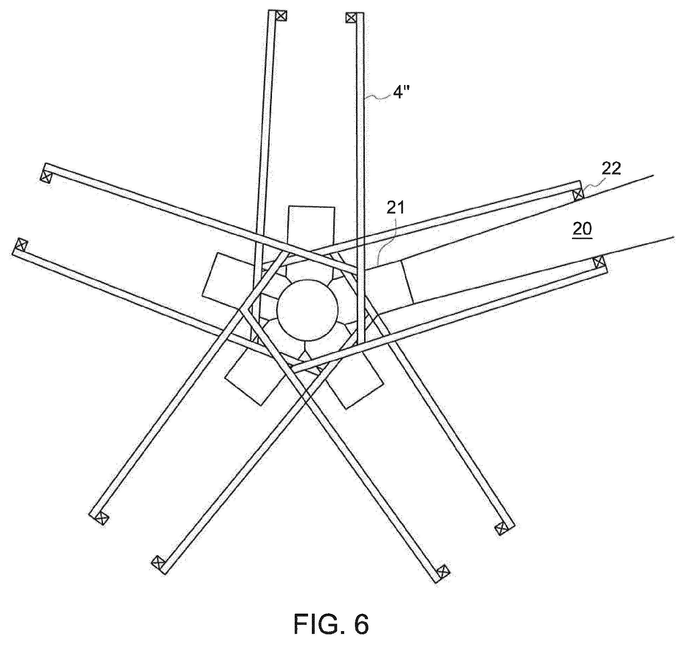

Fig. 6 shows a hub capable of supporting five blades. Again, the individual beams can be of any of the previously described configurations, but this time the presence of additional beams provides multiple cross-over points and therefore high structural rigidity at the centre of the hub. Again, one blade 20 is shown supported by the inner bearing 21 and outer bearing 22.

In order to connect the hub to the drive shaft D, the drive shaft D may extend into the central portion of the hub as shown in Figs. 1C and 1D. In the case of the parallel sided shaft as shown in these Figures, the drive shaft D is provided with a shoulder to support the leeward side of the hub and a plate is clamped over the windward side to hold the hub in place. Alternatively, the drive chain D may have a tapered configuration in which case no shoulder is required.

As an alternative, rather than the drive chain D extending into the hub, the leeward side of the hub may be provided with a flange in the central region which is bolted onto an end face of the drive chain.

Various aspects and embodiments of the present invention are defined by the following numbered clauses:
1. A hub for a wind turbine blade, the hub having a central axis about which it is rotatably mountable on a shaft and comprising three or more blade supporting arms, each for supporting a respective blade, the hub having a leeward side, in use, facing a supporting tower and a windward side, in use, facing in the opposite direction, wherein each arm comprises, on the leeward side, a pair of composite load bearing spar caps with uniaxial fibres, the spar caps and fibres extending continuously from the radially outermost extremity of the hub, past the shaft with a respective one of the pair on each side of the shaft, across a respective adjacent arm and terminating at the far side of the respective adjacent arm; and on the windward side, a second pair of composite load bearing spar caps with uniaxial fibres, the spar caps and fibres extending continuously from the radially outermost extremity of the hub, past the shaft, with a respective one of the second pair on each side of the shaft, across a respective adjacent arm and terminating on the far side of the respective adjacent arm.
2. A hub according to clause 1, wherein when the spar cap of one arm crosses the spar cap of an adjacent arm it is rigidly fixed to it.
3. A hub according to any preceding clause, wherein in any first or second pair of spar caps, the spar caps are offset in an axial sense with respect to one another.
4. A hub according to any preceding clause, wherein each spar cap of any first or second pair is in a single plane.
5. A hub according to any preceding clause, wherein each arm comprises a pair of beams extending along opposite sides of the respective arm; wherein each beam has a spar cap at each end.
6. A hub according to any preceding clause, wherein the each beam has a composite web extending from the windward side to the leeward side, the web comprising multiaxial fibres.
7. A hub according t any preceding clause, wherein there are three arms and each beam intersects with one respective beam of both of the other arms and terminates on the beam of an adjacent arm which is furthest from its radially outermost position.
8. A hub according to any preceding clause, wherein each arm has two beams with the beams from adjacent arms crossing one another at a position close to the centre of the hub.
9. A hub according to any preceding clause, wherein each arm is made up of a first wide beam and a second relatively narrow beam, the relatively narrow beam being sized to fit between the spar caps of a wide beam.
10. A hub according to any preceding clause, wherein each arm has a pair of radially spaced apart annular bearings for receiving a respective wind turbine blade.
11. A hub according to any preceding clause, wherein in any first or second pair of spar caps, the spar caps are offset in an axial sense with respect to one another.
12. A hub according to any preceding clause, wherein each spar cap of any first or second pair is in a single plane.
13. A hub according to any preceding clause, wherein each spar cap of any first or second pair is in a single plane.
14. A hub according to any preceding clause, wherein each arm comprises a pair of beams extending along opposite sides of the respective arm; wherein each beam has a spar cap at each end.
15. A hub according to any preceding clause, wherein each arm comprises a pair of beams extending along opposite sides of the respective arm; wherein each beam has a spar cap at each end.
16. A hub according to any preceding clause, wherein each arm comprises a pair of beams extending along opposite sides of the respective arm; wherein each beam has a spar cap at each end.
17. A hub according to any preceding clause, wherein the each beam has a composite web extending from the windward side to the leeward side, the web comprising multiaxial fibres.
18. A hub according to any preceding clause, wherein there are three arms and each beam intersects with one respective beam of both of the other arms and terminates on the beam of an adjacent arm which is furthest from its radially outermost position.
19. A hub according to any preceding clause, wherein each arm has two beams with the beams from adjacent arms crossing one another at a position close to the centre of the hub.
20. A hub according to any preceding clause, wherein each arm has two beams with the beams from adjacent arms crossing one another at a position close to the centre of the hub.

## Claims

1. A hub for a wind turbine blade (20), the hub having a central axis about which it is rotatably mountable on a shaft and comprising three or more blade supporting arms (A,B,C), each for supporting a respective blade (20), the hub having a leeward side, in use, facing a supporting tower and a windward side, in use, facing in the opposite direction, wherein each arm (A,B,C) comprises, on the leeward side, a pair of composite load bearing spar caps (4,7) with uniaxial fibres, the spar caps (4,7) and fibres extending continuously from the radially outermost extremity of the hub, past the shaft with a respective one of the pair on each side of the shaft, across a respective adjacent arm (A,B,C) and terminating at the far side of the respective adjacent arm (A,B,C); and on the windward side, a second pair of composite load bearing spar caps (4,7) with uniaxial fibres, the spar caps (4,7) and fibres extending continuously from the radially outermost extremity of the hub, past the shaft, with a respective one of the second pair on each side of the shaft, across a respective adjacent arm (A,B,C) and terminating on the far side of the respective adjacent arm (A,B,C).

2. A hub according to claim 1, wherein when the spar cap (4,7) of one arm crosses the spar cap of an adjacent arm it is rigidly fixed to it.

3. A hub according to claim 1 or claim 2, wherein in any first or second pair of spar caps, the spar caps (4,7) are offset in an axial sense with respect to one another.

4. A hub according to any of claims 1 to 3, wherein each spar cap (4,7) of any first or second pair is in a single plane.

5. A hub according to any preceding claim, wherein each arm (A,B,C) comprises a pair of beams (1,2) extending along opposite sides of the respective arm; wherein each beam has a spar cap (4,7) at each end.

6. A hub according to claims 4 or 5, wherein the each beam (1,2) has a composite web (3) extending from the windward side to the leeward side, the web (3) comprising multiaxial fibres.

7. A hub according to any of claims 5 to 6, wherein there are three arms (A,B,C) and each beam intersects with one respective beam (1,2) of both of the other arms (A,B,C) and terminates on the beam of an adjacent arm which is furthest from its radially outermost position.

8. A hub according to any one of claims 5 to 7, wherein each arm (A,B,C) has two beams (1,2) with the beams from adjacent arms crossing one another at a position close to the centre of the hub.

9. A hub according to any one of claims 5 to 8, wherein each arm (A,B,C) is made up of a first wide beam (2) and a second relatively narrow beam (1), the relatively narrow beam being sized to fit between the spar caps (4,7) of a wide beam (2).

10. A hub according to any one of the preceding claims, wherein each arm (A,B,C) has a pair of radially spaced apart annular bearings (12,13) for receiving a respective wind turbine blade (20)
